# EUROPEAN PATENT APPLICATION

(11) **EP 4 345 301 A1**
(43) Date of publication of application: **03.04.2024**
(21) Application number: 22197923.0
(22) Date of filing: 27.09.2022
(51) Int. Cl.: F03D 80/50, F03D 80/80, H02B 1/00, H02B 13/00, H05K 5/00

(54) **A NACELLE FOR A WIND TURBINE**

(71) Applicant: Siemens Gamesa Renewable Energy A/S, 7330 Brande (DK)
(72) Inventor: Jensen, Morten Lauridsen, 8200 Aarhus N (DK)
(74) Representative: SGRE-Association

(57) **Abstract**

A nacelle (4) for wind turbine with an electric cabinet (6) to store electric components is provided. The electric cabinet (6) comprising housing (10) with cavity for storing elements, an opening (20) with opening frame (30) for accessing the cavity, an accessing element (40) to cover said opening (20) and to be movable from open position to closed position. The accessing element (40) comprises an overlap area (50) partially matching with a portion of the opening frame (30) at closed position. The electric cabinet (6) comprising detachable fastening system (60) and securing system (70) arranged in the opening frame (30) and in the overlap area (50). The securing system (70) configured to selectively be moved from unlocked position to locked position preventing the access to the cavity. The detachable fastening system (60) configured to selectively be moved from unsealed position to sealed position to sealing the cavity airtightly.

## Description

### FIELD OF THE INVENTION

The present invention relates to a nacelle for a wind turbine with an electric cabinet, more specifically to an electric cabinet for storing electrical elements of a wind turbine.

### BACKGROUND OF THE INVENTION

Electric cabinets are used in a wind turbine for storing elements such as electrical devices, control units, cooling system parts, etc.; to protect from external factors e.g. dust, moisture and the like.

Indeed, some electric cabinets require to be airtight to protect the elements stored therein from external agents which could damage the elements therein. However, due to required periodical maintenance tasks, the electric cabinets need to be accessed regularly which makes difficult to obtain an effective airtight electric cabinet.

It is well-known to provide electric cabinets with ridged, hinged or bolted doors made of materials such as metal to ensure an airtight closure of the electric cabinets.

The maintenance tasks may be lengthy and complex. For instance, in cases of electric cabinets with bolted doors, a technician needs to unscrew a plurality of bolts, remove the door to access the electric cabinet and afterwards, screw the plurality of bolts back to close the electric cabinet.

In addition, the space to maneuver when performing maintenance tasks may be limited which may further extend the duration and also increase the complexity of the task which may involve a higher risk for the technician.

It is therefore a goal of the present invention to provide a nacelle with an electric cabinet which enables a quick, easy and secure access while at the same time allows an airtight closure.

### SUMMARY OF THE INVENTION

The object of the invention is achieved by the independent claims. The dependent claims describe advantageous developments and modifications of the invention.

In accordance with the invention there is provided a nacelle for a wind turbine. The nacelle comprises space for hosting maintenance personnel and an electric cabinet with electrical components stored therein. The electric cabinet comprises a housing with a cavity for storing elements therein. The electric cabinet comprises an opening for accessing the cavity, wherein the opening comprises an opening frame. The electric cabinet comprises an accessing element configured to cover said opening. The accessing element is configured to be movable from an open position, in which the cavity is accessible, to a closed position. The accessing element comprises an overlap area, wherein the overlap area is at least partially matching with a portion of the opening frame at the closed position.

In addition, the electric cabinet comprises a detachable fastening system arranged in the opening frame and in the overlap area of the accessing element. The electric cabinet comprises a securing system arranged in the opening frame between the opening and the detachable fastening system and correspondingly, in the overlap area of the accessing element, between the opening and the detachable fastening system. The securing system is configured to selectively be moved from an unlocked position to a locked position, in which prevents the access to the cavity. The detachable fastening system is configured to selectively be moved from an unsealed position to a sealed position, in which enables to airtightly sealing the cavity.

By having a combination of a securing system and a detachable fastening system as claimed enables obtaining an airtight electric cabinet. In addition, the use of such systems allows a fast and easy access/locking of the cavity thereby facilitating maintenance tasks by reducing the complexity and time and thus enhancing the security.

In an example, the accessing element may be made of a flexible material such as tarpaulin, plastic, polymer or fabric.

The use of a flexible material makes the accessing element easy to handle which thereby enables a convenient access therefore reducing the complexity of maintenance tasks.

In an example, the accessing element may be configured to be moved from an open position to a closed position by rolling it down.

Rolling down the accessing element, the opening up of the accessing element may not require so much space therefore further facilities opening the accessing element (to gain access to the cavity) in limited space locations as. In addition, a complete removal of the accessing element may be prevented which reduces the risk of accidents e.g. preventing falls and slips. Furthermore, the complexity of the maintenance tasks may be reduced (when compared to prior art solutions) as the time to access the cavity is reduced.

In an example, the accessing element may be configured to be moved from the closed position to the open by rolling up on itself. The closing of the accessing element may thus not require so much space which further facilitates closing the accessing element in limited space locations. In addition, an ease handling of the accessing element simplifies the maintenance tasks.

In an example, the accessing element may be partially joined to the housing and therefore there may be no need to completely remove the accessing element from the electric cabinet. The maintenance tasks in narrow spaces may there be simpler.

In an example, the detachable fastening system may be a hook and loop system, which is reliable, cheaper and commonly available closing system.

In an example, the securing system may be is a Ziplock, zip sliders or zipper which is reliable, cheaper and commonly available.

In an example, the accessing element may have a pulling element to pull out the accessing element into the open position which further facilitates the open/close of the accessing element.

In an example, the opening frame may extend partially around the opening.

### BRIEF DESCRIPTION OF THE DRAWINGS

Embodiments of the invention are now described, by way of example only, with reference to the accompanying drawings, of which:
- Figure 1: schematically illustrates a wind turbine according to an example;
- Figure 2: schematically illustrates a perspective view of a plurality of electric cabinets according to an example; and
- Figure 3: schematically illustrates a perspective view of an electric cabinet according to an example; and
- Figure 4: schematically illustrates a perspective view of an electric cabinet with according to an example; and
- Figure 5: schematically illustrates a perspective view of an electric cabinet with the accessing element in a closed position according to an example.

The illustration in the drawings is in schematic form. It is noted that in different figures, similar or identical elements may be provided with the same reference signs.

### DESCRIPTION OF THE DRAWINGS

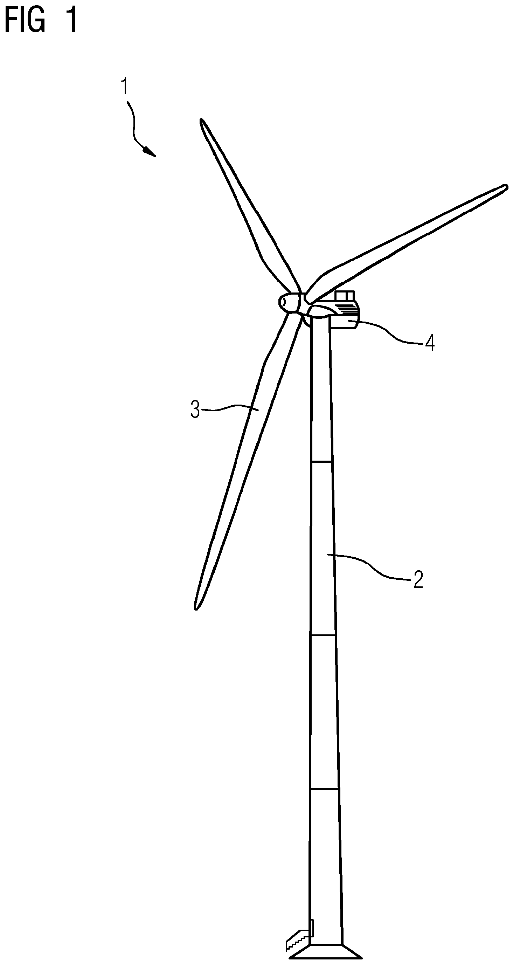

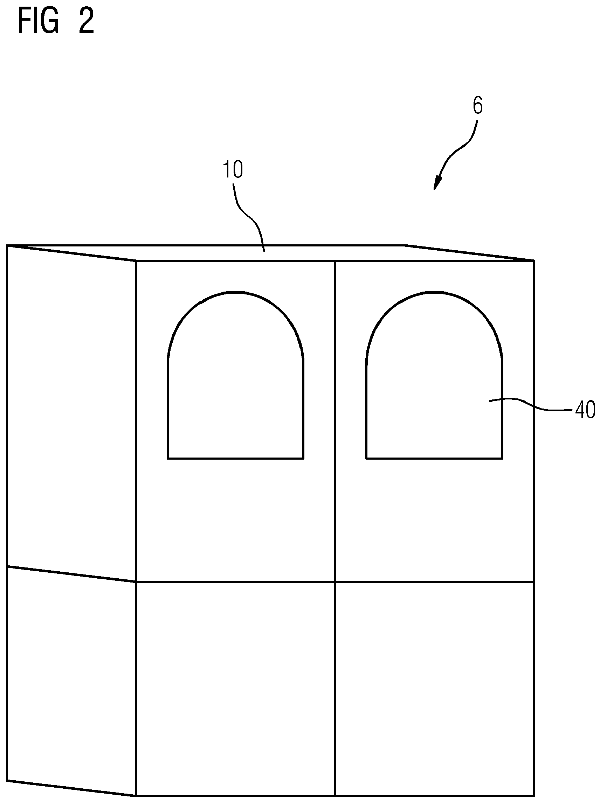

Figure 1 shows a wind turbine 1 which may comprise a tower 2, a rotor 3 with at least one blade, and a nacelle 4. The nacelle 4 may be located at the top of the tower 2 and serves to store and protect different elements of the wind turbine 1 e.g. the gearbox, the generator, the drive train, etc. The nacelle 4 may comprise at least one electric cabinet (see figure 2) to store and protect components of different systems of the wind turbine 1 such as electrical devices, control units, cooling system parts, etc.

In order to prevent damage and ensure a proper functionality, some wind turbine elements or systems, e.g. the cooling system, may need to be sealed or even be airtightly stored for enhanced protection from external factors e.g. dust, moisture, humidity, etc. These wind turbine elements or systems may not usually need be removed and may be stored in electric cabinets (see figure 2).

Figure 2 shows a plurality of electric cabinets 6, which may be positioned inside the nacelle. Each electric cabinet 6 may comprise a housing 10 with a cavity to store different elements therein e.g. electrical devices, control units, cooling system parts, etc. The housing 10 may be a voluminous hollow item where elements may be stored. The housing 10 may be of any shaped e.g. cube-shaped or rectangular. The housing may be made of metal, plastic or any other suitable composition, which may allow the electric cabinet to be airtight and keep elements safe under different external conditions.

Each electric cabinet 6 may have an accessing element 40 to access the internal cavity i.e. may serve to open and close the electric cabinet 6. The accessing element 40 may have two positions: an open position and a closed position. The accessing element 40 may be configured to be selectively movable from the open position, in which the cavity is accessible, to the closed position.

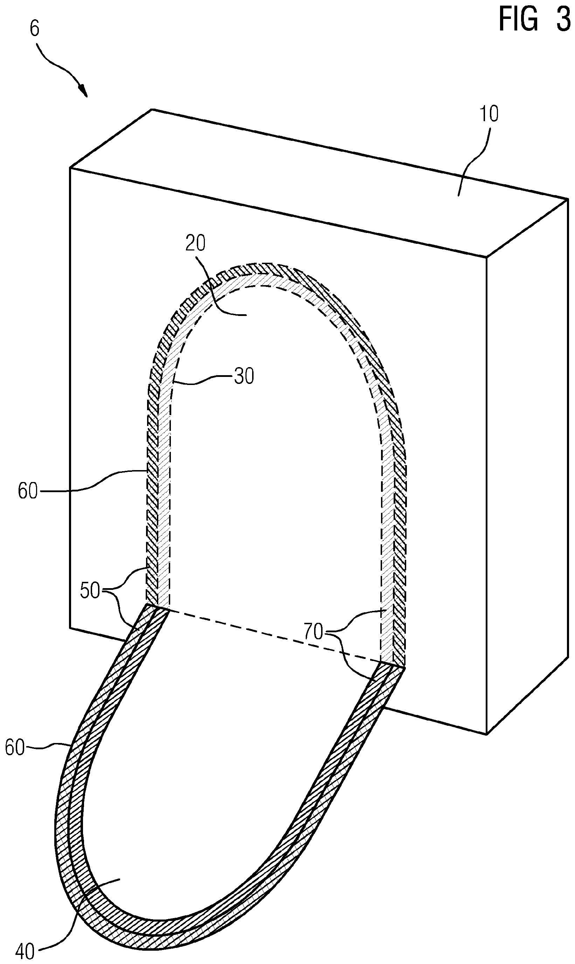

Figure 3 shows an electric cabinet 6 wherein the accessing element 40 is in the open position. The electric cabinet 6 may have an opening 20 to access to the cavity. The opening 20 may have an opening frame 30 that may be extended in the perimeter of the opening 20. The opening frame 30 may be of any shape, e.g. curved, square or square with rounded edges. The accessing element 40 may have a shape corresponding to the opening 20 in order to match with it and thus ensure that the opening 20 is completely covered when the accessing element 40 is in the closed position. The accessing element 40 may further comprise an overlap area 50 at least partially matching with a portion of the opening frame 30 in the closed position. A portion of the accessing element 40 may be arranged or attached to a portion of the opening frame 30.

The accessing element 40 may be a single piece completely or partially detachable from the electric cabinet 6. The accessing element 40 may be centered or decentered in any of the electric cabinet 6 sides.

The accessing element 40 may be made of an airtight material e.g. tarpaulin, plastic, polymer, fabric or any combination thereof. The material may be flexible to allow the accessing element 40 to be rolled up on itself for opening up the electric cabinet 6.

The electric cabinet 6 may also have a detachable fastening system 60. The detachable fastening system 60 may be a hook and loop system or any other suitable system. The detachable fastening system 60 may be configured to be selectively moved from an unsealed position to a sealed position in which the cavity may be airtightly sealed. The detachable fastening system 60 may comprise two parts: a first part may be arranged in the opening frame 30 of the opening 20 and the second part may be arranged in the overlap area 50 of the accessing element 40. Thus, when the accessing element 40 is in the closed position, both first and second parts of the detachable fastening system 60 may match and thereby the electric cabinet 6 may be closed.

The electric cabinet 6 may further comprise a securing system 70. The securing system 70 may be a zipper, e.g. metal zipper, molded zipper, coil zippers, nylon zipper, water resistant zipper or fire-resistant zipper. The securing system 70 may be configured to be selectively moved from an unlocked position to a locked position in which the access to the cavity may be prevented. The securing system 70 may comprise two parts: a first part which may be arranged in the opening frame 30 of the opening 20, and a second part which may be arranged in the overlap area 50 of the accessing element 40. The securing system 70 may be arranged in the overlap area and between the opening 20 and the detachable system. That is, the securing system 70 may be arranged in the inner part of the opening frame 30 and the overlap area 50, while the detachable fastening system 60 may be arranged in the outer part of the opening frame 30 and the overlap area 50.

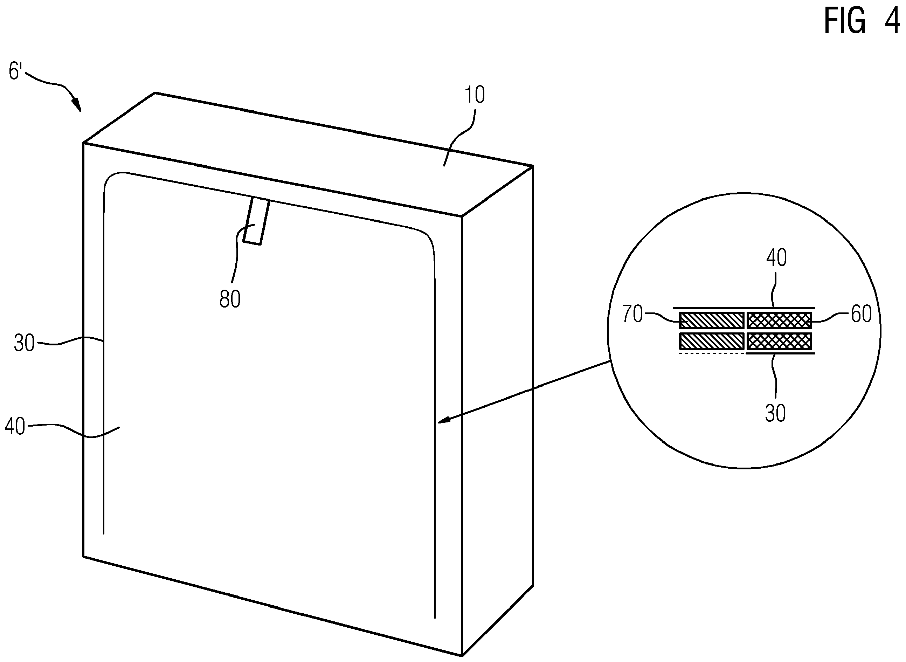

Figure 4 shows an electric cabinet 6' according to an example. The electric cabinet 6' corresponds to the electric cabinet 6 of Figure 3 except in that the opening is U-shaped.

Figure shows the electric cabinet 6' comprising the accessing element 40 in the close position in which the access to the cavity is prevented i.e. the cavity is not accessible.

Additionally, in some examples, the accessing element 40 may comprise a pulling element 80 to further facilitate the opening up and the closure of the accessing element 40. The pulling element 80 may be a small tab that may be placed on the external face of the accessing element 40 i.e. in the external side of the accessing element in the closed position. In some examples, the pulling element 80 may be arranged at any point of the perimeter of the accessing element 40, preferably at the region to be firstly detached when the accessing element 40 is moved from the closed position to the open position. In such examples, the pulling element 80 may be configured to ease the pulling down the accessing element 40 and thus facilitate opening up the accessing element 40. In addition, in those examples where the accessing element 40 is partially joined to the housing, the pulling element 80 may be arranged (substantially) on the center of the side of the accessing element opposite the part that is joined to the housing.

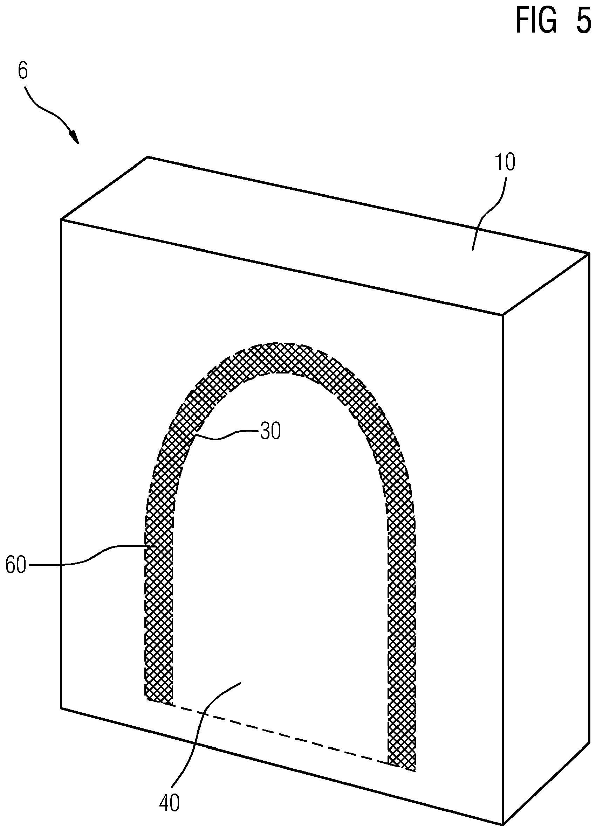

Fig 5 shows in more detail the overlap area of an electric cabinet 6 in the closed position. The shape of the overlap area may vary according to the shape of the opening and the opening frame. The shape of the opening and opening frame may be rectangular, squared, oval or square with rounded edges. The shape of the overlap area may match to the shape of the opening and opening frame in order to close the electric cabinet 6.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A nacelle (4) for a wind turbine (1) comprising a working space for hosting maintenance personnel and an electric cabinet (6) with electrical components stored therein, the electric cabinet (6) comprising:
- a housing (10) with a cavity for storing elements therein,
- an opening (20) for accessing the cavity, wherein the opening (20) comprises an opening frame (30),
- an accessing element (40) configured to cover said opening (20), the accessing element (40) configured to be movable from an open position, in which the cavity is accessible, to a closed position; and wherein the accessing element (40) comprises an overlap area (50) at least partially matching with a portion of the opening frame (30) at the closed position,
- a detachable fastening system (60) arranged in the opening frame (30) and in the overlap area (50) of the accessing element (40), and
- a securing system (70) arranged in the opening frame (30) between the opening (20) and the detachable fastening system (60) and correspondingly in the overlap area of the accessing element (40),
wherein the securing system (70) is configured to be selectively moved from an unlocked position to a locked position in which prevents the access to the cavity, and
wherein the detachable fastening system (60) is configured to selectively be moved from an unsealed position to a sealed position, in which enables to airtightly sealing the cavity.

2. The nacelle (4) according to claim 1, wherein the accessing element (40) is made of a flexible material.

3. The nacelle (4) according to claim 1 or 2, wherein the material of the accessing element (40) is tarpaulin, plastic, polymer or fabric.

4. The nacelle (4) according to any of the previous claims, wherein the accessing element (40) is configured to be moved from an open position to a closed position by rolling down the accessing element (40).

5. The nacelle (4) according to any of the previous claims, wherein the accessing element (40) configured to be moved from the closed position to the open position by rolling up on itself.

6. The nacelle (4) according to any of the previous claims, wherein the detachable fastening system (60) is a hook and loop system.

7. The nacelle (4) according to any of the previous claims, wherein the securing system (70) is a zipper.

8. The nacelle (4) according to any of the previous claims, wherein the accessing element (40) has a pulling element (80) to pull out the accessing element (40) into the open position.

9. The nacelle (4) according to any of the previous claims, wherein the opening frame (30) extends partially around the opening (20).

10. The nacelle (4) according to any of the previous claims, wherein the accessing element (40) is partially joined to the housing (10).
